# DEMANDE DE BREVET EUROPEEN

(11) **EP 0 686 369 A1**
(43) Date de publication de la demande: **13.12.1995**
(21) Numéro de dépôt: 95420139.8
(22) Date de dépôt: 30.05.1995
(51) Int. Cl.: A47J 43/10

(54) **Manche de fouet de cuisine**

(30) Priorité: 07.06.1994 FR 9407161
(71) Demandeur: SOCIETE DES ETABLISSEMENTS COMBRICHON, F-01600 Trevoux (FR)
(72) Inventeur: Butte, Patrick, F-69005 Lyon (FR)
(74) Mandataire: Laurent, Michel

(57) **Abrégé**

Ce manche de fouet de cuisine comporte au niveau de ses extrémités une pluralité de boucles (3) constituant le fouet proprement dit.

Le manche est constitué d'un corps de manche (1) creux s'évasant en direction des boucles (3), et est destiné à recevoir à ce niveau un insert (2) de forme correspondante solidarisable à celui-ci, le dit insert étant destiné à coopérer avec le corps (1) pour assurer la fixation des boucles (3) constitutives du fouet.

L'ensemble corps (1) - insert (2) après mise en place des boucles (3) et fixation de l'insert (2) sur le corps (1), reçoit une couche périphérique de matière plastique (6).

## Description

L'invention concerne un nouveau type de manche de fouet de cuisine.

De manière connue, un fouet de cuisine est un ustensile comportant une multitude de boucles en fil métallique rigide, dont toutes les extrémités sont rassemblées sur un manche. Un fouet sert à battre ou mélanger des préparations culinaires, notamment des sauces.

De manière très répandue, les fouets de cuisines comportent des manches en bois ou en tube métallique. Etant en contact avec des liquides, notamment lors du lavage, le bois du manche a tendance à s'abîmer, voire à se putréfier. Il existe également des manches en matière plastique, mais qui présentent le double inconvénient d'être lourds et de brûler les mains lors d'une utilisation prolongée.

Il a été commercialisé des fouets, dont le corps de manche est creux et est réalisé en acier inoxydable ou non, et sur lequel les boucles métalliques sont rapportées par soudage. Malheureusement, l'étanchéité est souvent altérée au niveau de l'entrée des fils dans le manche et à l'extrémité opposée dudit manche, autorisant la pénétration d'ingrédients dans le corps du manche. La conséquence de cette introduction se traduit par une prolifération bactérienne inacceptable et incompatible avec les règles d'hygiène.

De façon générale, les manches de fouet sont cylindriques ou de symétrie de révolution, ce qui ne facilite pas la préhension notamment en présence de matière grasse.

L'objet de l'invention est de pallier ces différents inconvénients.

L'invention concerne un manche de fouet de cuisine comportant au niveau de l'une de ses extrémités une pluralité de boucles constituant le fouet proprement dit. Il se caractérise :
- en ce que le manche est constitué d'un corps de manche creux s'évasant en direction des boucles, destiné à recevoir à ce niveau un insert de forme correspondante, solidarisable à celui-ci, le dit insert étant destiné à coopérer avec le corps pour assurer la fixation des boucles constitutives du fouet;
- et en ce que l'ensemble corps-insert, après mise en place des boucles et fixation de l'insert sur le corps, reçoit une couche périphérique de matière plastique.

En d'autres termes, le corps de manche est creux et évasé à l'une de ses extrémités. Il reçoit dans la cavité évasée ainsi définie une pièce de forme tronconique de dimensions légèrement inférieures. Les boucles du fouet, notamment métalliques, sont maintenues dans l'espace entre l'insert et l'intérieur de la cavité du corps. L'ensemble est ensuite surmoulé, ce qui permet de garantir une bonne étanchéité au niveau de la zone de raccord entre les boucles métalliques et le manche.

Avantageusement, l'insert est fixé au corps du manche par une goupille diamétrale située à l'extrémité du manche.

Dans une forme pratique de réalisation, l'insert tronconique comprend un ensemble de rainures s'étendant selon des génératrices du tronc de cône le définissant, et destinées à recevoir la partie inférieure des boucles métalliques. Les rainures, régulièrement réparties sur la périphérie dudit tronc de cône, sont de longueurs étagées et sont symétriques par rapport à l'axe du manche. Leur extrémité coopère avec des lamelles faisant saillie, ménagées au fond de la cavité évasée du corps du manche pour bloquer, en coopération avec l'extrémité inférieure desdites rainures les extrémités recourbées des parties inférieures des boucles métalliques, lesdites lamelles étant de longueur étagées, symétriques par rapport à l'axe du manche, et de longueur complémentaire à celle des rainures avec lesquelles elles coopèrent.

En d'autres termes, les boucles métalliques sont placées selon des plans ayant pour intersection commune l'axe de révolution du manche. Du fait de l'épaisseur du fil métallique, les sommets des boucles, formant l'extrémité du fouet, sont décalés selon l'axe du manche. Les extrémités des boucles sont reçues dans les rainures de l'insert. De manière à utiliser des boucles identiques, l'un des objets de l'invention consiste à donner aux rainures des longueurs différentes en fonction du décalage dû à la superposition des boucles. Les extrémités des boucles sont bloquées sur les rainures par un ensemble de lamelles moulées avec le corps du manche. Ces lamelles ont donc des hauteurs étagées correspondantes, et coopèrent avec les rainures correspondantes et complémentaires de l'insert, afin de bloquer les extrémités desdites boucles.

Le manche est creux, ce qui permet au fouet de flotter et diminue son poids.

En pratique, le manche est réalisé en polyoléfine et notamment en polypropylène.

De manière préférée, la section du manche est polygonale, notamment octogonale de manière à faciliter la préhension et empêcher la rotation du manche dans la main. La section du manche s'élargit du côté des boucles métallique afin d'éviter le glissement du manche selon son axe. Cette forme s'adapte parfaitement à l'anatomie de la main, lors de la préhension du manche entre le pouce et l'index, soulignant de fait le caractère ergonomique du manche ainsi réalisé.

La manière dont l'invention peut être réalisée et les avantages qui en découlent ressortiront mieux de l'exemple de réalisation qui suit, donné à titre indicatif et non limitatif à l'appui des figures annexées.

La figure 1 est une coupe longitudinale du manche complet.

La figure 2 est une coupe longitudinale du corps du manche.

La figure 3 est une vue longitudinale de l'insert.

La figure 4 est une représentation schématique en perspective de l'insert.

La figure 5 est une vue de l'insert perpendiculairement à l'axe du manche.

La figure 6 est une coupe du manche selon la ligne VI-VI' de la figure 1.

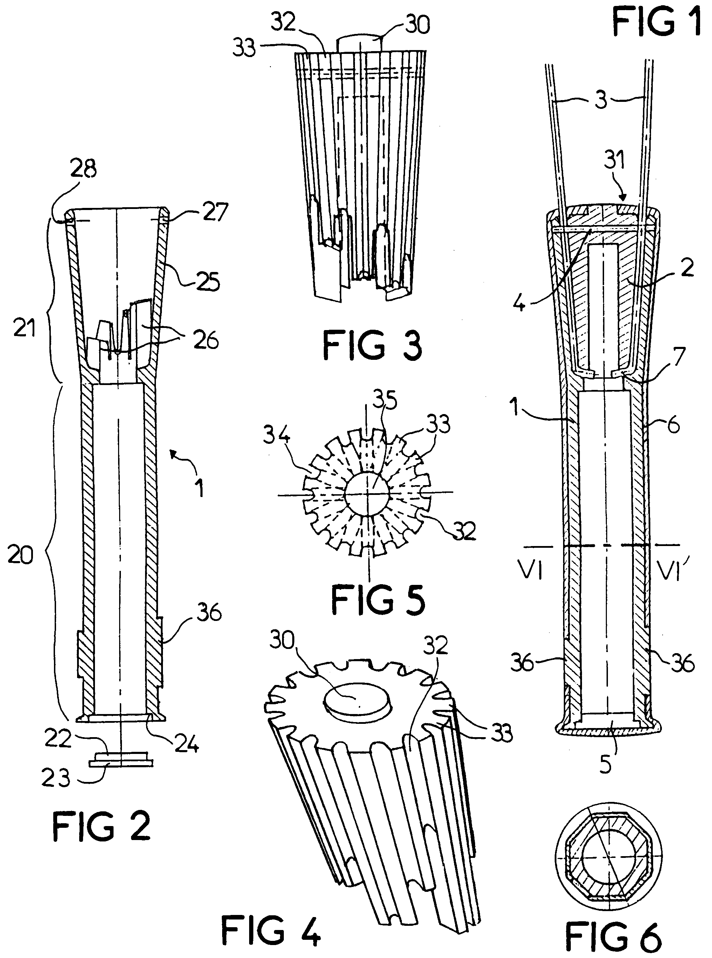

Comme représenté selon la figure 1, le manche de fouet se compose d'un corps de manche creux (1), dans lequel est inséré un insert (2) destiné, en coopération avec le corps du manche (1) à maintenir les boucles métalliques (3) constitutives du fouet proprement dit. L'insert (2) est fixé au manche par une goupille (4). L'extrémité libre du manche est obturée par un bouchon (5) et l'ensemble corps du manche (1) - insert (2) est surmoulé, de sorte que la couche extérieure (6) crée une barrière étanche, notamment aux liquides.

Le corps (1) du manche, comme représenté à la figue 2, comprend deux parties principales. La première partie (20) est longue et rectiligne, et la seconde partie (21) en forme de tronc de cône évidé constitue la zone de fixation des boucles métalliques (3). Cependant, la forme générale qui est conférée au manche a également pour rôle de favoriser la préhension du manche, et son utilisation sans crispation, en évitant le glissement de la main en direction du fouet. De la sorte, outre un rôle purement technique, le manche selon l'invention remplit également un rôle ergonomique important, favorisant son utilisation.

La partie longue (20) est creuse pour alléger le fouet, et partant, lui permettre de surnager lorsqu'il est plongé dans un liquide. La cavité est fermée par un bouchon (5), constitué de deux cylindres superposés, dont le plus étroit (22) pénètre dans le corps du manche, alors que le plus large (23) est bloqué par un décrochement (24) ménagé à cet effet au niveau de l'extrémité libre du manche.

La section du manche est octogonale, comme on peut l'observer selon la coupe VI-VI' sur la figure 5. L'avantage principal de cette forme est de permettre une bonne préhension en évitant la rotation du manche dans la main lorsque celle-ci est humide ou graisseuse.

La partie évasée (21) du corps du manche (1) est destinée à recevoir l'insert (2) pour maintenir les boucles métalliques (3) entre le cône (25) et ledit insert (2). Cette partie évasée est constituée d'un tronc de cône (25) de quelques degrés d'ouverture et de lamelles (26) s'étendant radialement au fond de cette partie évasée, en direction de l'axe de révolution du corps de manche (1). Ces lamelles (26) coopèrent avec l'insert (2) pour bloquer les extrémités (7) des boucles métalliques (3). A proximité de l'extrémité du tronc de cône (25) sont ménagés deux orifices traversants (27,28) placés diamétralement destinés à recevoir une goupille (4) de fixation de l'insert (2) sur le corps du manche (1).

L'insert (2) représenté en figure 3, présente une forme générale tronconique. Sur la grande section du cône, l'insert (2) comporte un cylindre central (30), dont la fonction est de permettre le maintien de l'insert (2) et partant, du corps de manche (1), lors du surmoulage. En outre, son extrémité évasée, confère, en coopération avec la couche de matière plastique (6) mise en place par surmoulage, une forme bombée au manche au niveau de la zone d'émergence des fils métalliques (3) constitutifs du fouet, favorisant le passage et l'évacuation du liquide de lavage à ce niveau et donc, l'élimination bactérienne.

L'insert (2) comporte sur sa périphérie un ensemble de rainures (32), s'étendant à intervalle régulier selon des génératrices du tronc de cône. Ces rainures (32) sont destinées à recevoir la partie inférieure des boucles métalliques (3). Les rainures placées en position diamétralement opposées (32,34) sont de même longueur. Toutes les paires de rainures ont des longueurs différentes, le plus petit écart entre deux longueurs correspondant sensiblement à l'épaisseur du fil métallique constitutif des boucles (3). En effet, afin d'utiliser des boucles (3) identiques, le décalage généré par la superposition des boucles est rattrapé au niveau de l'insert (2).

L'extrémité de la partie inférieure des boucles (3) se termine par un crochet (7), recourbé en fin de rainure pour empêcher l'arrachement du fil métallique correspondant. Lorsque les boucles sont en place dans leurs rainures respectives, l'ensemble insert-boucles est amené dans la partie (21) évasée du corps du manche, et la périphérie (33) du cône de l'insert ainsi que les boucles viennent s'appuyer sur la face interne du cône (21). De plus, l'enfoncement de l'insert (2) au sein de la zone (21) est limité par les lamelles (26) placées au fond de la zone évasée (21) et issues de moulage. Ces lamelles (26) s'étendent radiallement depuis la face interne de la paroi définissant la zone (21). Elles sont destinées à coopérer avec les extrémités des rainures (32), de sorte à assurer le blocage du crochet (7) de chacune des boucles métalliques (3), évitant ainsi les risques d'arrachement et de rotation sur elles-mêmes desdites boucles. De fait, ces lamelles ont une hauteur variable, afin de coopérer étroitement avec les rainures également de longueur variable, les lamelles les plus hautes coopérant avec les rainures de plus faibles longueurs et vice versa.

La partie centrale de l'insert (2) est creuse pour permettre le rabat des extrémités (7) des boucles (3). Le cylindre creux est également utile lors du moulage par injection de l'insert.

Lorsque toutes les pièces ont été assemblées, on procède au surmoulage, par exemple en polypropylène légèrement souple, tel que commercialisé sous la marque déposée KRATON par la société MULTIBASE, ce qui a pour conséquence de former une enveloppe étanche autour du manche. La forme du moule présente un bombage au niveau de la sortie (31) des boucles, ce qui permet, comme déjà dit un nettoyage facile de l'ustensile.

Comme représenté en figure 2, deux excroissances (36) sont présentes sur le corps du manche (1) à l'opposé de la zone evasée (21). Ces deux excroissances affleurent à la périphérie du manche après l'opération de surmoulage. En d'autres termes, la hauteur de la saillie qu'ils génèrent correspond sensiblement à l'épaisseur de la couche (6) de matière plastique surmoulée. Lors du surmoulage, le corps de manche et l'insert maintenant les boucles sont amenés dans un moule de surmoulage. La principale fonction de ces excroissances (36) est de garantir le centrage du corps de manche (1) dans le moule. En outre, l'affleurement de ces excroissances constitue une zone sur laquelle peut-être apposé un signe distinctif.

Comme il ressort de la description qui précède, l'invention présente de nombreux avantages concernant notamment l'hygiène, par le fait d'une étanchéité parfaite due au surmoulage. En outre, la conception originale de l'insert permet d'utiliser un type unique de boucle ce qui facilite la fabrication du fouet complet. Il faut également noter que l'utilisation de matériaux légers et de formes ergonomiques apportent un confort certain à l'utilisateur. Ce confort est en outre renforcé de part le matériau légèrement souple utilisé pour le surmoulage effectué au niveau du manche, et qui évite tout phénomène de tétanisation lors de son utilisation.

## Revendications

**1/** Manche de fouet de cuisine comportant au niveau de ses extrémités une pluralité de boucles (3) constituant le fouet proprement dit, ***caractérisé***:
- en ce que le manche est constitué d'un corps de manche (1) creux s'évasant en direction des boucles (3), destiné à recevoir à ce niveau un insert (2) de forme correspondante, solidarisable à celui-ci, le dit insert étant destiné à coopérer avec le corps (1) pour assurer la fixation des boucles (3) constitutives du fouet,
- et en ce que l'ensemble corps (1) - insert (2), après mise en place des boucles (3) et fixation de l'insert (2) sur le corps (1), reçoit une couche périphérique de matière plastique (6).

**2/** Manche de fouet de cuisine selon la revendication 1, ***caractérisé*** en ce que l'insert (2) et le corps de manche (1) sont solidarisés au moyen d'une goupille (4).

**3/** Manche de fouet de cuisine selon l'une des revendications 1 ou 2, ***caractérisé*** en ce que l'insert (2) tronconique comporte une pluralité de rainures (32), régulièrement réparties à sa périphérie, s'étendant selon des génératrices du tronc de cône constituant ledit insert, destinées à recevoir les extrémités des boucles métalliques (3), lesquelles rainures sont de longueurs étagées symétriques par rapport à l'axe du manche et dont les extrémités coopèrent avec des lamelles (26) faisant saillie par rapport à la paroi définissant ledit insert (2), ménagées au fond de la partie évasée (21) du corps du manche pour bloquer les extrémités recourbées (7) des parties inférieures des boucles métalliques (3), lesdites saillies étant de longueur étagées, symétriques par rapport à l'axe du manche, et de longueur complémentaire à celle des rainures (32, 34) avec lesquelles elles coopèrent.

**4/** Manche de fouet de cuisine selon l'une des revendications 1 à 3, ***caractérisé*** en ce que le corps de manche (1) et l'insert (2) sont réalisés en polyoléfine, notamment en polypropylène.

**5/** Manche de fouet selon l'une des revendications 1 à 4, ***caractérisé*** en ce que la couche périphérique (6) de matière plastique est mise en place sur l'ensemble corps-insert par surmoulage, ladite matière plastique étant constituée par du polypropylène légèrement souple.

**6/** Manche de fouet de cuisine selon l'une des revendications 1 à 5, ***caractérisé*** en ce que la zone (31) d'émergence des boucles (3) est de forme convexe et bombée.

**7/** Manche de fouet de cuisine selon l'une des revendications 1 à 6, ***caractérisé*** en ce que le corps (1) du manche est de section polygonale, notamment octogonale.
